# EUROPÄISCHE PATENTSCHRIFT

(11) **EP 0 378 713 B1**
(45) Veröffentlichungstag und Bekanntmachung des Hinweises auf die Patenterteilung: **07.12.1994**
(21) Anmeldenummer: 89100637.1
(22) Anmeldetag: 14.01.1989
(51) Int. Cl.: G05B 15/02, G05B 9/03

(54) **Digitales Steuer- und Regelverfahren für eine gas- oder dampfdurchströmte Turbomaschine sowie Vorrichtung zur Durchführung des Verfahrens**
Digital control and regulation method for a gas or steam turbine, and device for carrying out the method
Procédé numérique de commande et de régulation pour une turbomachine à gaz ou à vapeur et dispositif pour la mise en oeuvre de ce procédé

(43) Veröffentlichungstag der Anmeldung: 25.07.1990
(73) Patentinhaber: MAN Gutehoffnungshütte Aktiengesellschaft, 46122 Oberhausen (DE)
(72) Erfinder: Blotenberg, Wilfried Dr.-Ing., DE-4220 Dinslaken (DE); Gebhardt, Bernard Dr.-Ing., DE-5830 Schwelm (DE); Gebhardt, Ulrich, DE-5830 Schwelm (DE)
(74) Vertreter: Schulze Horn, Stefan, Dipl.-Ing. M.Sc.

(56) Entgegenhaltungen:
- EP-A- 0 298 396
- FR-A- 2 346 757
- FR-A- 2 492 552
- PATENT ABSTRACTS OF JAPAN vol. 7, no. 168 (P-212)(1313) 23 Juli 1983,& JP-A-58 75202 (TOKYO SHIBAURA DENKI K.K.) 06 Mai 1983,

## Beschreibung

Die Erfindung betrifft ein Verfahren nach dem Oberbegriff des Patentanspruchs 1. Weiterhin betrifft die Erfindung eine Vorrichtung zur Durchführung des Verfahrens.

Aus der Praxis der Regeltechnik sind unterschiedliche Regelverfahren für den genannten Zweck bekannt, wobei sich diese grundsätzlich in analoge und digitale Verfahren unterteilen lassen. Analoge Verfahren reagieren zwar praktisch unverzögert, sind aber wenig flexibel, während digitale Verfahren zwar eine größere Flexibilität bieten, aber aufgrund der ihnen eigenen Abtastzeiten erst mit einer gewissen Verzögerung reagieren können. Für den Betrieb von Turbomaschinen sind derartige Verzögerungen sehr nachteilig, da sie eine Vergrößerung der Sicherheitsabstände von gefährlichen oder unzulässigen Betriebszuständen erforderlich machen, was den nutzbaren Arbeitsbereich der Turbomaschine einschränkt. Zum Teil lassen sich die Einschränkungen hinsichtlich der Reaktionszeit dadurch vermindern, daß ein digitales Steuer- und Regelverfahren verwendet wird, daß sich eines in Assembler-Sprache programmierten Mikroprozessorsystems bedient. Nachteilig ist aber hierbei, daß die Flexibilität wieder stark vermindert wird und daß das Programmieren in Assembler-Sprache sehr aufwendig ist und sehr große Spezialkenntnisse erfordert.

Aus der DE-PS 31 05 376 ist ein Regelverfahren bekannt, welches eine Kombination aus analogem und digitalem Verfahren darstellt. Die Grundregelung erfolgt durch einen Analogregler, dessen Ausgangssignale von einem digitalen Zusatzregler mit Korrekturwerten beaufschlagt werden, welche die Regelcharakteristik optimieren. Die Analogregelung ist dabei so ausgelegt, daß die Abblaselinie als Gerade in einem sicheren Abstand von der Pumpgrenzlinie der Turbomaschine verläuft, so daß bei Ausfall des digitalen Systems noch ein sicherer Betrieb möglich ist. Als nachteilig ist bei diesem Verfahren anzusehen, daß die Verknüpfung von analogen und digitalen Signalen einen hohen Schaltungsaufwand erfordert. Außerdem ist das digitale System hier nicht in der Lage die Regelung bei Ausfall des Analogreglers allein zu übernehmen.

Es stellt sich daher die Aufgabe, ein digitales Steuer- und Regelverfahren der eingangs genannten Art zu schaffen, das einerseits eine komfortable Handhabung und hohe Flexibilität und Betriebssicherheit bietet und andererseits nur sehr kurze Reaktionsverzögerungen aufweist. Außerdem soll eine Vorrichtung zur Durchführung des Verfahrens angegeben werden.

Die Lösung des ersten Teils dieser Aufgabe gelingt erfindungsgemäß durch ein digitales Steuer- und Regelverfahren der eingangs genannten Art gemäß dem kennzeichnenden Teil des Patentanspruchs 1.

Mit dem erfindungsgemäßen Verfahren werden die bisher unvereinbar erscheinenden Forderungen gemäß der Aufgabenstellung erfüllt, indem zwei Rechnersysteme parallel verwendet werden, die zusammenarbeiten und dabei jeweils spezielle Aufgaben übernehmen. Die Verwendung des schnellen Rechnersystems sorgt für sehr kurze Reaktionsverzögerungen, während die komfortable Handhabung und hohe Flexibilität durch die Verwendung des zweiten Rechnersystems mit seinem umfangreichen Befehlsvorrat gewährleistet wird. Damit ist beispielsweise die Verwendung einer höheren, leicht erlernbaren Programmiersprache möglich. Die Tatsache, daß das erste, schnelle Rechnersystem nur einen begrenzten Befehlsvorrat aufweist, stellt hier keinen Nachteil dar, weil bei Bedarf jeweils ein neues Programm nebst Sollwertsatz vom zweiten Rechnersystem in das erste Rechnersystem geladen wird. Auch der langsamere Zeittakt des zweiten Rechnersystems fällt bei diesem neuen Verfahren nicht nachteilig ins Gewicht, da das zweite Rechnersystem im normalen Verfahrensablauf keine unmittelbaren, eine schnelle Reaktion erfordernden Steuer- und Regelaufgaben zu übernehmen hat.

Über die angegebenen Vorteile hinaus bietet das neue Verfahren umfangreiche Möglichkeiten der Überwachung auf Fehler im Verfahrensablauf. Eine erste Ausgestaltung des Verfahrens sieht vor, daß das zweite, langsamere Rechnersystem in vorgebbaren Zeitabständen zumindest die erfaßten Betriebsparameter und die berechneten Steuerparameter eines Rechenzyklus sowie gegebenenfalls auch das Steuer- und Regelprogramm und den Sollwertsatz vom ersten, schnellen Rechnersystem übernimmt, eine Nachberechnung der Steuerparameter durchführt, die nachberechneten Steuerparameter mit den zuvor vom ersten Rechnersystem berechneten Steuerparametern vergleicht und bei einen Grenzwert überschreitenden Unterschieden einen Alarm auslöst. Die Nachberechnung durch das zweite Rechnersystem nimmt zwar eine längere Zeit in Anspruch als die vorher vom ersten Rechnersystem durchgeführte Erstberechnung; es ist aber dennoch eine ausreichend frühe Erkennung von Fehlern im Verfahrensablauf sichergestellt, weil die Nachberechnung immer noch weniger Zeit in Anspruch nimmt als die Erkennung von Fehlern durch an der Turbomaschine angeordnete, deren Betriebsparameter erfassende Meßglieder.
Um hierbei eine vorzeitige Alarmauslösung mit der Folge unnötiger Betriebsunterbrechungen oder -störungen der Turbomaschine zu vermeiden, ist vorgesehen, daß nach jeder Nachberechnung, die einen Grenzwert überschreitende Unterschiede ergeben hat, wenigstens eine weitere Nachberechnung nach erneuter Übernahme zumindest der Betriebsparameter und der berechneten Steuerparameter vom ersten Rechnersystem durch das zweite Rechnersystem durchgeführt wird und daß erst nach wenigstens zwei aufeinanderfolgenden Nachrechnungen, die alle einen Grenzwert überschreitende Unterschiede ergeben haben, ein Alarm ausgelöst wird.

Eine alternative Möglichkeit der Überwachung des Verfahrens auf Fehler in seinem Ablauf besteht darin, daß das zweite, langsamere Rechnersystem in vorgebbaren Zeitabständen für ein vorgebbares Zeitintervall eine Wertefolge für einen oder mehrere der vom ersten, schnellen Rechnersystem erfaßten Betriebsparameter und/oder berechneten Steuerparameter übernimmt, deren Gradienten berechnet und bei Überschreiten vorgebbarer oder technisch vorgegebener Gradienten-Grenzwerte einen Alarm auslöst. In dieser Ausgestaltung des Verfahrens wird die Tatsache ausgenutzt, daß sich bestimmte Betriebsparameter der Turbomaschine oder Zustände von Stellgliedern an der Turbomaschine nur mit bestimmten maximalen zeitlichen Gradienten ändern können, so daß deren Überschreitung als Anzeichen für einen Ablauffehler des Verfahrens gelten kann. Geeignete Betriebsparameter sind z. B. die Drehzahl der Turbomaschine, die sich aufgrund der Massenträgheit der sich drehenden Maschinenteile auch bei voller Leistung nur mit einem begrenzten maximalen zeitlichen Gradienten ändern kann, oder der Druck und Durchfluß durch einen Turboverdichter sowie die Temperatur des verdichteten Mediums, die sich aufgrund des dynamischen Verhaltens des geförderten Gases im angeschlossenen Leitungsnetz ebenfalls nur mit begrenzten Gradienten ändern können. Die Steuerparameter, die vom Rechnersystem berechnet werden, sind an sich nicht mit einer Gradientenbegrenzung behaftet; hier besteht aber die Möglichkeit, im Steuer- und Regelprogramm eine Begrenzung vorzusehen, um die maximalen Steuerparameter-Gradienten an die Verstellgeschwindigkeit der Stellglieder anzupassen. Hierdurch können auch die berechneten Steuerparameter in diese Überwachung einbezogen werden.

Eine weitere Kontrollmöglichkeit besteht schließlich darin, daß in vorgebbaren, vorzugsweise gleichbleibenden Zeitabständen das erste Rechnersystem einen Setzimpuls an das zweite Rechnersystem sendet und daß das zweite Rechnersystem die ankommenden Setzimpulse auf zeitliche Regelmäßigkeit überwacht und bei einem unregelmäßigen Ankommen oder einem Ausbleiben der Setzimpulse einen Alarm auslöst. Diese Verfahrensvariante stellt zwar eine nur indirekte Überwachung dar, liefert aber dennoch mit hoher Wahrscheinlichkeit Aussagen über das Vorliegen von Fehlern im Verfahrensablauf und bietet zudem den Vorteil einer hohen Schnelligkeit und eines geringen Aufwandes.

Für den weiteren Verfahrensablauf bei Auslösen eines Alarms sieht eine Weiterbildung der Erfindung vor, daß im Alarmfall das zweite, langsamere Rechnersystem ein Abschaltprogramm aktiviert und die Turbomaschine geregelt zurückfährt und abschaltet. Hierdurch wird sichergestellt, daß Schäden an der Turbomaschine vermieden werden, es tritt jedoch in jedem Fall eine Betriebsunterbrechung ein.

Eine weitere Verfahrensvariante sieht in dieser Hinsicht vor, daß im Alarmfall das zweite, langsamere Rechnersystem die Steuerung und Regelung der Turbomaschine übernimmt. Dadurch wird eine vollständige Betriebsunterbrechung vermieden, es muß aber ein erhöhtes Risiko in Kauf genommen werden, da nun die Reaktionsgeschwindigkeit des Regel- und Steuerverfahrens vermindert ist.

Um dem zuletzt genannten Nachteil abzuhelfen, ist vorgesehen, daß bei Übernahme der Steuerung und Regelung der Turbomaschine durch das zweite Rechnersystem die Sicherheitsabstände zu gefährlichen Betriebszuständen durch Laden entsprechend geänderter Sollwertsätze vergrößert werden. Diese Maßnahme gewährleistet einen sicheren Betrieb, da Betriebszustände in den Grenzbereichen zu gefährlichen oder unzulässigen Betriebszuständen unmöglich gemacht werden.

Um bei Alarmfällen, deren Auslösung lediglich auf zufälligen Störungen, z. B. der Datenübertragung, beruht, die Turbomaschine nicht unnötig stillzusetzen oder unnötig lange durch das langsamere Rechnersystem zu steuern und zu regeln, ist vorgesehen, daß nach Übernahme der Steuerung und Regelung der Turbomaschine durch das zweite Rechnersystem das erste Rechnersystem mit einem Testprogramm geladen wird, welches in seinem Ablauf dem im zweiten Rechnersystem ablaufenden Steuer- und Regelprogramm entspricht und welches zyklisch die Steuer-Parameter-Berechnungen des zweiten Rechnersystems wiederholt, und daß bei Übereinstimmung beider Steuerparameter-Berechnungen in einem Zyklus oder mehreren aufeinanderfolgenden Zyklen die Steuerung und Regelung der Turbomaschinen nach Laden eines entsprechenden Steuer- und Regelprogrammes nebst Sollwertsatz in das erste Rechnersystem wieder von diesem übernommen wird. Hiermit wird dafür gesorgt, daß entweder wieder zum normalen Verfahrensablauf zurückgekehrt wird oder daß, bei weiterem Auftreten von Unregelmäßigkeiten, ein zwar nicht optimaler, aber sicherer Verfahrensablauf aufrecht erhalten wird, bis eine weitere Fehlerdiagnose erfolgt ist.

Weiter ist für das Steuer- und Regelverfahren noch vorgesehen, daß bei Nicht-Übereinstimmung der Steuerparameter-Berechnungen des ersten und des zweiten Rechnersystems jeweils derjenige der beiden parallel berechneten Steuerparameter ausgewählt und ausgegeben wird, der die Turbomaschine zu einem Betriebszustand mit dem größeren Abstand von gefährlichen oder unzulässigen Betriebszuständen führt. Dabei kann die Auswahl des einen der beiden parallel berechneten Parameter innerhalb des einen der beiden Rechnersysteme oder unabhängig von diesen in einer externen, nachgeschalteten Auswahleinheit erfolgen. Hierdurch wird insbesondere erreicht, daß bei kleineren Differenzen zwischen den Ergebnissen der beiden Rechnersysteme der Betrieb des Verdichters sicher weitergehen kann und nicht unnötig unterbrochen wird.

Eine weitere Verfahrensvariante sieht vor, daß das erste, schnelle Rechnersystem in mehrfacher Ausführung verwendet wird, daß das zweite, langsamere Rechnersystem in einfacher Ausführung als gemeinsamer Hauptrechner für die schnellen Rechnersysteme verwendet wird, daß das zweite Rechnersystem in zyklischen Abständen, vorzugsweise nacheinander, die von den ersten, schnellen Rechnersystemen berechneten Steuerparameter nachberechnet und daß bei Ausfall der ersten, schnellen Rechnersysteme dessen Funktion unter Vermittlung durch das zweite Rechnersystem von einem oder mehreren der verbleibenden ersten, schnellen Rechnersysteme übernommen wird. Bei dieser Kombination eines Hauptrechners mit mehreren schnellen Rechnersystemen, vorzugsweise Signalprozessoren, kann die Aufgabe der Berechnung der Steuerparameter auf die einzelnen schnellen Rechnersysteme aufgeteilt werden, wobei jedes von diesen eine begrenzte Zahl von Teilaufgaben übernimmt. Bei Ausfall eines der schnellen Rechnersysteme werden dessen Teilaufgaben abgegeben und von einem oder mehreren anderen Rechnersystemen übernommen, so daß die Reaktionsgeschwindigkeit insgesamt kaum vermindert wird und eine sehr hohe Betriebssicherheit gewährleistet wird.

Schließlich ist als letzte Verfahrensausgestaltung noch vorgesehen, daß in vorgebbaren, vorzugsweise gleichbleibenden Zeitabständen das zweite Rechnersystem Setzimpulse an das erste Rechnersystem bzw. die ersten Rechnersysteme sendet, daß das erste Rechnersystem bzw. die ersten Rechnersysteme die ankommenden Setzimpulse auf zeitliche Regelmäßigkeit überwacht bzw. überwachen und bei einem unregelmäßigen Ankommen oder Ausbleiben der Setzimpulse einen Alarm auslöst bzw. auslösen und daß das erste Rechnersystem bzw. die ersten Rechnersysteme zumindest solange mit dem jeweils geladenen Steuer- und Regelprogramm nebst Sollwertsatz weiterbetrieben werden, bis wieder ordnungsgemäße Setzimpulse vom zweiten Rechnersystem empfangen werden. Hierdurch wird eine Kontrolle auch in umgekehrter Richtung, d. h. eine Überwachung des langsameren Rechnersystems durch das schnelle System, erreicht und es wird sichergestellt, daß ein Betrieb der Turbomaschine auch bei Ausfall des Hauptrechners noch möglich ist, solange die Betriebsweise der Maschine nicht geändert werden soll oder muß.

Die Lösung des zweiten Teils der gestellten Aufgabe gelingt erfindungsgemäß durch eine Vorrichtung gemäß dem Patentanspruch 1 . Die angegebene Vorrichtung erlaubt eine zuverlässige Durchführung des zuvor beschriebenen Verfahrens und stellt die Peripherieeinheiten zur Verfügung, die zum einen für die interne Kommunikation und die Kommunikation der beiden Rechnersysteme untereinander und zum anderen für deren Kommunikation mit den Meß- und Stellgliedern der Turbomaschine benötigt werden.

Weiterhin wird mit der Erfindung erreicht, daß durch die Verwendung von zwei Rechnersystemen eine volle Redundanz für die Rechenglieder vorhanden ist. Bei Ausfall des einen Rechnersystems kann das andere Rechnersystem - wenn auch mit gewissen Einschränkungen - die gesamten Funktionen des einen Rechnersystems übernehmen und damit einen eingeschränkten Betrieb der Turbomaschine aufrecht erhalten. Ein besonderer Vorteil liegt noch darin, daß die Rechnersysteme unterschiedlich sind und infolgedessen ein Ausfall der gesamten Regel- und Steuervorrichtung aufgrund von Systemfehlern weitestgehend ausgeschlossen wird. Selbst wenn eines der Rechnersysteme einen systematischen Fehler enthalten sollte, so wird das andere Rechnersystem, das ja aus einer ganz anderen Fertigung stammt, diesen Fehler mit hoher Wahrscheinlichkeit nicht enthalten.

Eine vorteilhafte Weiterbildung der Vorrichtung sieht vor, daß die Kommunikationsschnittstelle zwischen der Signalprozessor-Zentraleinheit und dem Hauptrechner-Bus ein einen Zugriff von beiden Seiten erlaubender Random-Access-Speicher (Dual-Port-RAM) ist. Diese Schnittstelle bietet den besonderen Vorteil, daß die Zugriffszeitpunkte und Zugriffszeiten beliebig sind und daß beidseitige Zugriffe völlig unabhängig voneinander möglich sind.

Um eine weitere Kommunikationsmöglichkeit zwischen den beiden Rechnersystemen zu schaffen, ist schließlich noch vorgesehen, daß das erste Rechnersystem zusätzlich eine einerseits mit dem Signalprozessor-Peripheriebus und andererseits mit dem Hauptrechner-Bus verbundene, eine weitere Kommunikationsschnittstelle zwischen dem ersten und dem zweiten Rechnersystem bildende digitale Ein-/Ausgabe-Einheit aufweist.

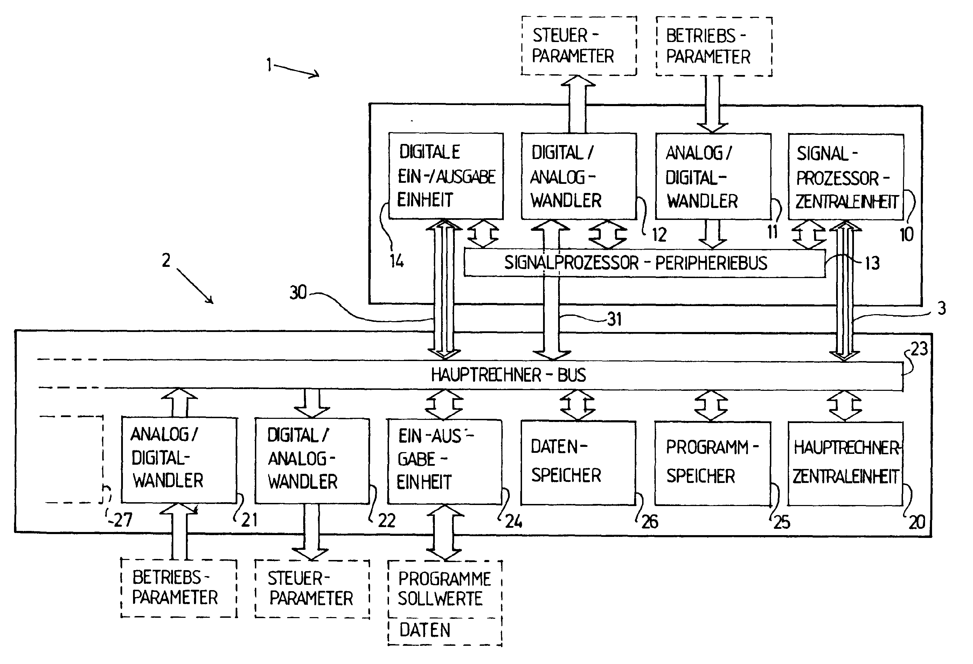

Ein Ausführungsbeispiel der erfindungsgemäßen Vorrichtung wird im folgenden anhand einer Zeichnung erläutert. Die einzige Figur der Zeichnung zeigt eine Steuer- und Regelvorrichtung in schematischer Blockdarstellung.

Wie aus der Figur ersichtlich ist, besteht das dargestellte Ausfuhrüngsbeispiel der Steuer- und Regelvorrichtung aus einem ersten Rechnersystem 1 und einem zweiten Rechnersystem 2. Das erste Rechnersystem ist hier ein Signalprozessor mit einer Signalprozessor-Zentraleinheit 10, einem Analog-Digital-Wandler 11, einem Digital-Analog-Wandler 12, einem Signalprozessor-Peripheriebus 13 und einer digitalen Ein-/Ausgabeeinheit 14. Die Kommunikation zwischen der Signalprozessor-Zentraleinheit 10 und den genannten Peripherie-Einheiten erfolgt über den Signalprozessor-Peripheriebus 13. Der Analog-Digital-Wandler 11 dient zur Erfassung von Betriebsparametern einer zugehörigen Turbomaschine, wobei die Betriebsparameter von an sich bekannten Meßgliedern geliefert werden. Der Digital-Analog-Wandler 12 dient in umgekehrter Richtung zur Ausgabe von Steuerparametern, die an an sich bekannte Stellglieder für die Turbomaschine abgegeben werden.

Das zweite Rechnersystem 2, das hier als Hauptrechner fungiert, umfaßt eine Hauptrechner-Zentraleinheit 20, einen Programmspeicher 25, einen Datenspeicher 26, eine Ein-/Ausgabe-Einheit 24, einen Digital-Analog-Wandler 22, einen Analog-Digital-Wandler 21 und einen Hauptrechner-Bus 23. Darüber hinaus kann das zweite Rechnersystem 2 noch weitere Peripherie-Einheiten 27 umfassen. Die interne Kommunikation im zweiten Rechnersystem 2, d. h. insbesondere die Kommunikation zwischen der Hauptrechner-Zentraleinheit 20 und den genannten Peripherieeinheiten erfolgt hier über den Hauptrechner-Bus 23. Der Analog-Digital-Wandler 21 des zweiten Rechnersystems 2 dient ebenfalls zur Erfassung von Betriebsparametern der Turbomaschine; entsprechend dient der Digital-Analog-Wandler 22 zur Abgabe von Steuerparametern an die Turbomaschine. Die Ein-/Ausgabe-Einheit 24 dient zur Ein- und Ausgabe von Programmen und Sollwerten sowie von sonstigen Daten.

Die Kommunikation zwischen den beiden Rechnersystemen 1 und 2 erfolgt über zwei Wege. Eine erste Kommunikationsschnittstelle besteht zwischen der Signalprozessor-Zentraleinheit 10 und dem Hauptrechner-Bus 23. Diese erste Kommunikationsschnittstelle 3 besteht vorzugsweise aus einem Random-Access-Speicher, der einen Zugriff von beiden Seiten gestattet. Eine zweite Kommunikationsschnittstelle 30 besteht zwischen der digitalen Ein-/Ausgabe-Einheit 14 des ersten Rechnersystems 1 und dem Hauptrechner-Bus 23 des zweiten Rechnersystems 2. Die Aufgabe dieser Schnittstelle 30 besteht darin, binäre Signale auf kürzestmöglichem Weg zwischen der digitalen Ein-/Ausgabe-Einheit 14 und dem Hauptrechner 2 hin und her zu übertragen.

Schließlich ist der Figur noch eine direkte Verbindung 31 zwischen dem Hauptrechner-Bus 23 und dem Digital/Analog-Wandler 12 des Signalprozessors 1 entnehmbar. Diese Verbindung 31 gewährleistet, daß auch der langsamere Hauptrechner 2 die von ihm berechneten Steuerparameter unmittelbar auf den Ausgang des Signalprozessors 1 übertragen kann, ohne daß eine externe Signalumschaltung erforderlich ist.

In der Praxis sind mit einem derartigen kombinierten Rechnersystem?auf der Seite des ersten Rechnersystems 1 Zykluszeiten von unter 1 ms realisierbar. Zugleich bietet das gesamte Rechnersystem einen hohen Handhabungskomfort, da das zweite Rechnersystem 2 einen umfangreichen Befehls- und Datenvorrat bietet.

## Patentansprüche

1. Digitales Steuer- und Regelverfahren zur Steuerung und Regelung einer gas- oder dampfdurchströmten Turbomaschine, wie Turbo- oder Schraubenverdichter, Gas- oder Dampfturbine oder Restgasexpander, wobei in dem Verfahren Betriebsparameter der Turbomaschine, wie Drehzahl, Durchflußmenge, Eingangsdruck, Ausgangsdruck und/oder Gas- bzw. Dampftemperatur, in einem regelmäßigen Zeittakt erfaßt werden, wobei aus den Betriebsparametern mittels wenigstens eines Steuer- und Regelprogrammes und anhand vorgebbarer Sollwerte Steuerparameter berechnet werden und wobei nach Maßgabe der berechneten Steuerparameter, z.B. für Eintrittsventilstellung, Schaufelstellung, Brennstoffmenge, Abblaseventilstellung, die Turbomaschine in ihrer Drehzahl und/oder Leistung gesteuert und überwacht sowie gegen Überdrehzahl und/oder Pumpen gesichert wird,
dadurch gekennzeichnet,
- daß wenigstens zwei unterschiedlich schnelle, parallel arbeitende und miteinander kommunizierende Rechnersysteme (1, 2) verwendet werden,
- daß das erste Rechnersystem (1) mit einem begrenzten Befehlsvorrat und einem schnellen Zeittakt sowie einem einzelnen Steuer- und Regelprogramm sowie Sollwertsatz arbeitet,
- daß das zweite Rechnersystem (2) mit einem umfangreichen Befehlsvorrat und einem langsameren Zeittakt arbeitet und eine Anzahl von Steuer- und Regelprogrammen sowie Sollwertsätzen bereithält,
- daß das erste, schnellere Rechnersystem (1) die jeweils benötigten Betriebsparameter erfaßt und Steuerparameter berechnet und an die Turbomaschine ausgibt und
- daß das zweite, langsamere Rechnersystem (2) bei jeder Änderung der Betriebsweise der Turbomaschine ein entsprechendes neues Steuer- und Regelprogramm nebst Sollwertsatz auswählt und in das erste, schnellere Rechnersystem (1) lädt.

2. Steuer- und Regelverfahren nach Anspruch 1, dadurch gekennzeichnet, daß das zweite, langsamere Rechnersystem (2) in vorgebbaren Zeitabständen das Steuer- und Regelprogramm, den Sollwertsatz, die erfaßten Betriebsparameter und die berechneten Steuerparameter vom ersten, schnellen Rechnersystem (1) übernimmt, eine Nachberechnung der Steuerparameter durchführt, die nachberechneten Steuerparameter mit den zuvor vom ersten Rechnersystem (1) berechneten Steuerparametern vergleicht und bei einen Grenzwert überschreitenden Unterschieden einen Alarm auslöst.

3. Steuer- und Regelverfahren nach Anspruch 2, dadurch gekennzeichnet, daß nach jeder Nachberechnung, die einen Grenzwert überschreitende Unterschiede ergeben hat, wenigstens eine weitere Nachberechnung nach erneuter Übernahme zumindest der Betriebsparameter und der berechneten Steuerparameter vom ersten Rechnersystem (1) durch das zweite Rechnersvstem (2) durchgeführt wird und daß erst nach wenigstens zwei aufeinanderfolgenden Nachrechnungen, die alle einen Grenzwert überschreitende Unterschiede ergeben haben ein Alarm ausgelöst wird.

4. Steuer- und Regelverfahren nach Anspruch 1, dadurch gekennzeichnet, daß das zweite, langsamere Rechnersystem (2) in vorgebbaren Zeitabständen für ein vorgebbares Zeitintervall eine Wertefolge für einen oder mehrere der vom ersten, schnellen Rechnersystem (1) erfaßten Betriebsparameter und/oder berechneten Steuerparameter übernimmt, deren Gradienten berechnet und bei Überschreiten vorgebbarer oder technisch vorgegebener Gradienten-Grenzwerte einen Alarm auslöst.

5. Steuer- und Regelverfahren nach Anspruch 1, dadurch gekennzeichnet, daß in vorgebbaren, vorzugsweise gleichbleibenden Zeitabständen das erste Rechnersystem (1) Setzimpulse an das zweite Rechnersystem (2) sendet und daß das zweite Rechnersystem (2) die ankommenden Setzimpulse auf zeitliche Regelmäßigkeit überwacht und bei einem unregelmäßigen Ankommen oder einem Ausbleiben der Setzimpulse einen Alarm auslöst.

6. Steuer- und Regelverfahren nach wenigstens einen der Ansprüche 2 bis 5, dadurch gekennzeichnet, daß im Alarmfall das zweite, langsamere Rechnersystem (2) ein Abschaltprogramm aktiviert und die Turbomaschine geregelt zurückfährt und abschaltet.

7. Steuer- und Regelverfahren nach wenigstens einem der Ansprüche 2 bis 5, dadurch gekennzeichnet, daß im Alarmfall das zweite, langsamere Rechnersystem (2) die Steuerung und Regelung der Turbomaschine übernimmt.

8. Steuer- und Regelverfahren nach Anspruch 7, dadurch gekennzeichnet, daß bei Übernahme der Steuerung und Regelung der Turbomaschine durch das zweite Rechnersystem (2) die Sicherheitsabstände zu gefährlichen Betriebszuständen durch Laden entsprechend geänderter Sollwertsätze vergrößert werden.

9. Steuer- und Regelverfahren nach Anspruch 7 oder 8, dadurch gekennzeichnet, daß nach Übernahme der Steuerung und Regelung der Turbomaschine durch das zweite Rechnersystem (2) das erste Rechnersystem (1) mit einem Testprogramm geladen wird, welches in seinem Ablauf dem im zweiten Rechnersystem (2) ablaufenden Steuer- und Regelprogramm entspricht und welches zyklisch die Steuerparameter-Berechnungen des zweiten Rechnersystems (2) wiederholt, und daß bei Übereinstimmung beider Steuerparameter-Berechnungen in einem Zyklus oder mehreren aufeinanderfolgenden Zyklen die Steuerung und Regelung der Turbomaschinen nach Laden eines entsprechenden Steuer- und Regelprogrammes nebst Sollwertsatz in das erste Rechnersystem (1) wieder von diesem übernommen wird.

10. Steuer- und Regelverfahren nach wenigstens einem der Ansprüche 2 bis 9, dadurch gekennzeichnet, daß bei Nicht-Übereinstimmung der Steuerparameter-Berechnungen des ersten und des zweiten Rechnersystems (1, 2) jeweils derjenige der beiden parallel berechneten Steuerparameter ausgewählt und ausgegeben wird, der die Turbomaschine zu einem Betriebszustand mit dem größeren Abstand von gefährlichen oder unzulässigen Betriebszuständen führt.

11. Steuer- und Regelverfahren nach wenigstens einem der Ansprüche 1 bis 10, dadurch gekennzeichnet,
- daß das erste, schnelle Rechnersystem (1) in mehrfacher Ausführung verwendet wird,
- daß das zweite, langsamere Rechnersystem (2) in einfacher Ausführung als gemeinsamer Hauptrechner für die schnellen Rechnersysteme (1) verwendet wird,
- daß das zweite Rechnersystem (2) in zyklischen Abständen, vorzugsweise nacheinander, die von den ersten, schnellen Rechnersystemen (i) berechneten Steuerparameter nachberechnet und
- daß bei Ausfall eines der ersten, schnellen Rechnersysteme (1) dessen Funktion unter Vermittlung durch das zweite Rechnersystem (2) von einem oder mehreren der verbleibenden ersten, schnellen Rechnersysteme (1) übernommen wird.

12. Steuer- und Regelverfahren nach wenigstens einem der Ansprüche 1 bis 11, dadurch gekennzeichnet,
- daß in vorgebbaren, vorzugsweise gleichbleibenden Zeitabständen das zweite Rechnersystem (2) Setzimpulse an das erste Rechnersystem (1) bzw. die ersten Rechnersysteme (1) sendet.
- daß das erste Rechnersystem (1) bzw. die ersten Rechnersysteme (1) die ankommenden Setzimpulse auf zeitliche Regelmäßigkeit überwacht bzw. überwachen und bei einem unregelmäßigen Ankommen oder Ausbleiben der Setzimpulse einen Alarm auslöst bzw. auslösen und
- daß das erste Rechnersystem (1) bzw. die ersten Rechnersysteme (1) zumindest solange mit dem jeweils geladenen Steuer- und Regelprogramm nebst Sollwertsatz weiterbetrieben werden, bis wieder ordnungsgemäße Setzimpulse vom zweiten Rechnersystem (2) empfangen werden.

13. Vorrichtung zur Durchführung des Verfahrens zur Steuerung und Regelung einer gas- oder dampf durchströmten Turbomaschine wie Turbo- oder Schraubenverdichter, Gas- oder Dampfturbine oder Rest gas expander nach wenigstems einem der Ansprüche 1 bis 12 mit Meßfühler zur Erfassung Betriebsparameter der Turbomaschine, wie Drehzahl, Durchflußmenge, Eingansdruck, Ausgangsdruck und/oder Gas- bzw. Dampftemperatur und einem Steuer- und Regelprogramm, welches aus den Betriebsparametern und an hand vorgebbarer Sollwerte Steuerparameter berechnet und Mitteln zur Sicherung der Turbomaschine gegen über drehzahl und/oder Pumpen, sowie, nach Maßgabe der berechneten Steuerparameter, z.B. für Eintrittsventilstellung, Schaufelstellung, Brennstoffmenge, Abblaseventilstellung, zur Steuerung der Turbomaschine in ihrer Drehzahl und/oder Leistung, dadurch gekennzeichnet,
- daß die Vorrichtung zwei unterschiedlich schnelle, parallel betreibbare und miteinander koppelbare Rechnersysteme (1, 2) umfaßt,
- daß das erste, schnelle Rechnersystem (1) ein Signalprozessor mit einer Signalprozessor-Zentraleinheit (10), wenigstens je einem Analog-Digital-Wandler (11) und Digital-Analog-Wandler (12) und einem eigenen Signalprozessor-Peripheriebus (13) ist,
- daß das zweite, langsamere Rechnersystem (2) als Hauptrechner mit einer Hauptrechner-Zentraleinheit (20), zusätzlichen Programm- und Datenspeichern (25, 26), Ein-/Ausgabe-Einheit (24), wenigstens je einem Analog-Digital-Wandler (21) und Digital-Analog-Wandler (22) und einem Hauptrechner-Bus (23) ausgebildet ist, und
- daß zwischen der Signalprozessor-Zentraleinheit (10) und dem Hauptrechner-Bus (23) wenigstens eine Kommunikationsschnittstelle (3) vorgesehen ist.

14. Vorrichtung nach Anspruch 13, dadurch gekennzeichnet, daß die Kommunikationsschnittstelle (3) zwischen der Signalprozessor-Zentraleinheit (10) und dem Hauptrechner-Bus (23) ein einen Zugriff von beiden Seiten erlaubender Random-Access-Speicher (Dual-Port-RAM) ist.

15. Vorrichtung nach Anspruch 13 oder 14, dadurch gekennzeichnet, daß das erste Rechnersystem (1) zusätzlich eine einerseits mit dem Signalprozessor-Peripheriebus (13) und andererseits mit dem Hauptrechner-Bus (23) verbundene, eine weitere Kommunikationsschnittstelle (30) zwischen dem ersten und dem zweiten Rechnersystem (1, 2) bildende digitale Ein-/Ausgabe-Einheit (14) aufweist.

## Claims

1. Digital control and regulation method for controlling and regulating a gas or steam turbo engine, like a turbo or screw-type compressor or tail gas expansion engine wherein by the method operating parameters of the engine like number of revolutions, rate of flow, inlet pressure, outlet pressure and/or gas or steam temperature, respectively, are recorded in a regular time-pulse, wherein by means of at least one control and regulation program and selectable desired values control parameters are calculated, and wherein on basis of the calculated control parameters, e.g. for inlet valve position, blade position, fuel amount, blow-off valve position, the turbo engine in the number of revolution and/or power thereof is controlled and monitored, and guarded against overspeed and/or surging,
**characterized in,**
- that at least two computer systems (1, 2) are used which vary in speed, operate in parallel, and communicate with each other,
- that the first computer system (1) operates with a limited amount of commands, and a fast time-pulse, and a single control and regulation program, and a set of desired values,
- that the second computer system (2) operates with a large amount of commands, and a slower time-pulse, and contains a number of control and regulation programs, and sets of desired values,
- that the first faster computer system (1) records the respective required operating parameters, and calculates the control parameters and transfers them to the turbo engine, and
- that the second slower computer system (2) selects a corresponding new control and regulation program and a set of desired values upon each variation of the operating mode of the turbo engine, and loads it into the first faster computer system (1).

2. Control and regulation method according to claim 1, characterized in, that in selectable time intervals the second slower computer system (2) takes over the control and regulation program, the set of desired values, the recorded operating parameters, and the calculated control parameters from the first faster computer program (1), carries out a re-calculation of the control parameters, compares the re-calculated control parameters with the control parameters calculated by the first computer system (1) before and triggers an alarm at differences exceeding a threshold value.

3. Control and regulation sytem according to claim 2, characterized in, that depending on the re-calculation resulting in differences exceeding a threshold value at least one further re-calculation is carried out by the second computer system (2) after a renewed take over of at least the operating parameters and the control parameters calculated by the first computer system (1), and that after at least two succeeding re-calculations all resulting in differences exceeding a threshold value an alarm is triggered.

4. Control and regulation system as claimed in claim 1, characterized in, that the second slower computer system (2) in selectable time intervals for a selectable time period takes over a set of values for one or more of the operating parameters and/or calculated control parameters from the first fast computer system (1), calculates the gradients thereof and triggers an alarm when selectable or technically preset gradient limits are exceeded.

5. Control and regulation system according to claim 1, characterized in, that in selectable, preferably equal time intervals the first computer system (1) transmits set pulses to the second computer system (2), and that the second computer system (2) controls the incoming set pulses for timely regularity and triggers an alarm when the set pulses arrive irregularly or lack.

6. Control and regulation system according to at least one of the claims 2 to 5, characterized in, that in case of alarm the second slower computer system (2) activates a de-energizing program and slows down the turbo engine in controlled fashion and de-energizes it.

7. Control and regulation system according to at least one of the claims 2 to 5, characterized in, that in case of alarm the second slower computer program (2) takes over the control and regulation of the turbo engine.

8. Control and regulation system according to claim 7, characterized in, that when taking over the control and regulation of the turbo engine by the second computer system (2) the safety margins to dangerous operating conditions are enlarged by loading correspondingly changed sets of desired values.

9. Control and regulation system according to claim 7 or 8, characterized in, that after the taking over of the control and regulation of the turbo engine by the second computer system (2) the first computer system (1) is loaded with a test program which corresponds in the execution thereof with the control and regulation program executed in the second computer system (2), and which cyclicly repeats the control parameter calculations of the second computer system (2), and that at a match of the two control parameter calculations in a cycle or several subsequent cycles after loading of a corresponding control and regulation program and a set of desired values into the first computer system (1) the control and regulation of the turbo engines again is taken over by the latter.

10. Control and regulation system according to at least one of the claims 2 to 9, characterized in, that at a non-match of the control parameter calculations of the first and second computer system (1, 2) the one of the two control parameters calculated in parallel is selected and put out which leads the turbo engine into an operating condition having the larger distance to dangerous or impermissible operating conditions.

11. Control and regulation system according to at least one of the claims 1 to 10, characterized in,
- that the first fast computer system (1) is used in several units,
- that the second slower computer system (2) is used as a single unit acting as a common main processing unit for the fast computer systems (1),
- that the second computer system (2) in cyclic, preferably succeeding intervals re-calculates the control parameters calculated by the first fast computer systems (1), and that at a break down of one of the first fast computer systems (1) the function thereof is taken over by one or more of the remaining first fast computer systems (1) under the management of the second computer system (2).

12. Control and regulation system according to at least one of the claims 1 to 11, characterized in,
- that in selectable preferably equal time intervals the second computer system (2) transmits set pulses to the first computer system (1) or systems (1), respectively,
- that the first computer system (1) or the first computer systems (1), respectively, monitors or monitor, respectively, the incoming set pulses for timely regularity and triggers or trigger, respectively, an alarm when the set pulses come in irregularly or lack, and
- that the first computer system (1) or the first computer systems (1), respectively, continue to operate with the respective loaded control and regulation program and set of desired values at least as long as orderly set pulses are received from the second computer program (2).

13. Device for carrying out the method for controlling and regulating a gas or steam turbo engine, like a turbo or screw-type compressor or tail gas expansion engine according to at least one of the claims 1 to 12, comprising sensors for recording operating parameters of the turbo engine like number of revolutions, rate of flow, inlet pressure, outlet pressure and/or gas or steam temperature, respectively, and a control and regulation program calculating control parameters on basis of operating parameters and selectable desired values, and means for safeguarding the turbo engine against overspeed and/or surging, and means for controlling the turbo engine as to the number of revolutions and/or power thereof on basis of the calculated control parameters, e.g. for inlet valve position, blade position, fuel amount, blow-off valve position,
**characterized in,**
- that the device comprises two differently fast computer systems (1, 2) operable in parallel and to be coupled with each other,
- that the first fast computer system (1) is a signal processor with a signal processor central unit (10), at least one analog/digital (A/D) transmitter (11) and one D/A-transmitter (12) each and one dedicated signal processor peripheral bus (13),
- that the second slower computer system (2) is designed as main computer with a main computer central unit (20), additional program and data memories (25, 26), input/output unit (24), at least one A/D transmitter (21) and D/A transmitter (22) each and a main computer bus (23), and
- that at least one communication interface (3) is provided between the signal processor central unit (10) and the main computer bus (23).

14. Device according to claim 13, characterized in, that the communication interface (3) between the signal processor central unit (10) and the main computer bus (23) is a random access memory (Dual-Port-RAM) allowing access from both sides.

15. Device according to claim 13 or 14, characterized in, that the first computer system (1) additionally comprises a digital input/output unit (14) which is on the one hand connected with the signal processor peripheral bus (13) and on the other hand with the main computer bus (23), and forms a further communication interface (30) between the first and second computer system (1, 2).

## Revendications

1. Procédé numérique de commande et de régulation pour la commande et la régulation d'une turbomachine à gaz ou à vapeur, telle qu'un compresseur à turbine ou à vis, une turbine à gaz ou à vapeur ou un détendeur à gaz résiduel, dans lequel on saisit au cours du procédé les paramètres de fonctionnement de la turbomachine tels que la vitesse de rotation, le débit traversant, la pression d'entrée, la pression de sortie et/ou la température du gaz ou de la vapeur, à une cadence régulière, on calcule, à partir des paramètres de fonctionnement et à l'aide d'au moins un programme de commande et de régulation et de valeurs de consigne prédéfinies les paramètres de commande, et on commande la vitesse de rotation et/ou la puissance de la turbomachine et on la surveille en ce qui concerne la survitesse et/ou le pompage après fourniture des paramètres de commande calculée, par exemple pour la position des valves d'entrée, la position des aubages, le débit de combustible, la position des valves d'échappement,
caractérisé en ce que:
- on utilise au moins deux systèmes de calculateur (1,2) à vitesses différentes, travaillant en parallèle et communiquant l'un avec l'autre,
- on fait fonctionner le premier système de calculateur (1) avec un jeu limité d'instructions et une vitesse d'horloge élevée ainsi qu'avec un programme de commande et de régulation et un jeu fr valeurs de consigne individuels.
- on fait fonctionner le deuxième système de calculateur (2) avec un jeu d'instructions plus complet et à une vitesse d'horloge plus lente et on maintient prêt à fonctionner un certain nombre de programmes de commande et de régulation ainsi que de jeux de valeurs de consigne,
- en ce que le premier système de calculateur le plus rapide (1) saisit chacun des paramètres de fonctionnement nécessaire et calcul les paramètres de commande et les envoi à la turbomachine,
- en ce que le deuxième système de calculateur plus lent (2) choisit à chaque modification du mode de fonctionnement de la turbomachine un nouveau programme de commande et de régulation correspondant ainsi qu'un jeu de valeur de consigne et les charge dans le premier système de calculateur plus rapide (1).

2. Procédé de commande et de régulation selon la revendication 1, caractérisé en ce que le deuxième système de calculateur plus lent prend en charge à partir du premier système de calculateur plus rapide (1), a des intervalles temporels pré-déterminés, le programme de commande et de régulation, le jeu de valeurs de consigne, les paramètres de fonctionnement déterminés et les paramètres de commande calculés, procède à un calcule ultérieur des paramètres de commande, les compare avec les paramètres de commande calculés auparavant par le premier système de calculateur (1), et dans le cas où la différence dépasse une valeur limite, déclenche une alarme.

3. Procédé de commande et régulation selon la revendication 2, caractérisé en ce qu'après chaque calcul ultérieur, qui a fourni une différence dépassant une valeur limite, au moins un calcul ultérieur supplémentaire est réalisé par le deuxième système de calculateur (2) après une nouvelle prise en charge d'au moins les paramètres de fonctionnement et les paramètres de commande calculés par le premier système de calculateur (1), et en ce qu'après au moins deux calculs ultérieurs qui se suivent qui ont tous fourni une différence dépassant une valeur limite, on déclenche une alarme.

4. Procédé de commande et de régulation selon la revendication 1, caractérisé en ce que le deuxième système de calculateur plus lent prend en charge à des intervalles temporels pré-déterminés pour un intervalle de temps pré-déterminé, une succession de valeurs pour un ou plusieurs paramètres de fonctionnement et/ou paramètre de commande calculés déterminés par le premier système de calculateur plus rapide (1), calcule leur gradient et en cas de dépassement des valeurs limites des gradients prédéterminées ou techniquement pré-déterminées, déclenche une alarme.

5. Procédé de commande et de régulation selon la revendication 1, caractérisé en ce que selon des intervalles temporaires pré-déterminés de préférence de même durée, le premier système de calculateur (1) adresse des impulsions de positionnement au deuxième système de calculateur (2) et en ce que le deuxième système de calculateur (2) surveille les impulsions de commande arrivantes en ce qui concerne leur régularité temporelle et en cas d'arrivée irrégulière ou en cas d'absence des impulsions de positionnement, déclenche une alarme.

6. Procédé de commande et de régulation selon au moins l'une des revendications 2 à 5, caractérisé en ce qu'en cas d'alarme, le deuxième système de calculateur plus lent (2) active un programme de déconnexion et régule la turbomachine au cours du processus de déconnexion et la déconnecte.

7. Procédé de commande et de régulation selon au moins l'une des revendications 2 à 5, caractérisé en ce qu'en cas d'alarme, le deuxième système de calculateur plus lent (2) prend en charge la commande et le réglage de la turbomachine.

8. Procédé de commande et de régulation selon la revendication 7, caractérisé en ce qu'en cas de prise en charge de la commande et du réglage de la turbomachine par le deuxième système de calculateur (2), les écarts de sécurité par rapport à des conditions de fonctionnement dangereuses sont augmentés par chargement de valeur de consigne de remplacement modifiées en correspondance.

9. Procédé de commande et de régulation selon la revendication 7 ou 8, caractérisé en ce qu'en cas de prise en charge de la commande et du réglage de la turbomachine par le deuxième système de calculateur (2), le premier système de calculateur (1) est chargé avec un programme de test ou d'essai, qui au cours de son déroulement correspond au programme de commande et de régulation se déroulant dans le deuxième système de calculateur (2) et qui répète cycliquement les calculs des paramètres de commande du deuxième système de calculateur (2), et en ce qu'en cas de correspondance des deux calculs des paramètres de commande au cours d'un cycle ou de plusieurs cycles réalisés les uns à la suite des autres, on prend en charge un nouveau dans le premier système de calculateur (1), la commande et la régulation des turbo machines après la charge d'un programme de commande et de régulation correspondant ainsi qu'un jeu de valeurs de consigne.

10. Procédé de commande et de régulation selon au moins l'une des revendications 2 à 9, caractérisé en ce qu'en cas de non correspondance des calculs des paramètres de commande du premier et du deuxième système de calculateur (1, 2), on choisit et on envoi dans chaque cas celui des deux paramètres de commande calculés en parallèle, qui conduit la turbomachine à un état de fonctionnement présentant le plus grand intervalle par rapport à des conditions de fonctionnement dangereuses ou inadmissibles.

11. Procédé de commande et de régulation selon au moins l'une des revendications 1 à 10, caractérisé en ce que:
- l'on utilise le premier système de calculateur rapide (1) selon plusieurs modes de réalisation,
- l'on utilise le deuxième système de calculateur plus lent (2) selon un mode de réalisation plus simple comme calculateur principal commun pour le système de calcul plus rapide (1),
- le deuxième système de calculateur (2) recalcule ultérieurement selon des écarts cycliques, de préférence successivement, les paramètres de commande calculés par le premier système de calculateur rapide (1), et,
- en cas de défaillance de l'un des premiers systèmes de calcul rapide (1), son fonctionnement est , pris en charge par un ou plusieurs des systèmes de calcul rapides restant (1) du deuxième système de calcul (2) par l'intermédiaire.

12. Procédé de commande et de régulation selon au moins l'une des revendications 1 à 11, caractérisé,
- en ce que le deuxième système de calcul (2) adresse, à des intervalles de temps pré-déterminés de préférence identiques des impulsions de positionnement au premier système de calcul (1) ou aux premiers systèmes;
- en ce que le ou les premier(s) système(s) (1) surveille(nt) les impulsions de positionnement arrivantes à des intervalles temporelles réguliers et en cas d'arrivée irrégulière ou d'absence de l'impulsion de commande déclenche(nt) une alarme, et
- en ce que le ou les premier(s) système(s) de calcul (1) sont piloté(s) par le programme de commande et de régulation chargé et le jeu de valeurs de consigne au moins, jusqu'à ce que l'on reçoive à nouveau des impulsions convenables du deuxième système de calcul (2).

13. Dispositif pour la mise en oeuvre du procédé de commande et de régulation d'une turbomachine à gaz ou à vapeur tel qu'un compresseur à turbine ou à vis, une turbine à gaz ou à vapeur, ou une machine de détente de gaz restant, selon au moins l'une des revendications 1 à 12, munie de capteurs de mesure pour la détermination des paramètres de fonctionnement de la turbomachine tels que la vitesse de rotation, le débit, la pression d'entrée, la pression de sortie et/ou la température du gaz ou de la vapeur et d'un programme de commande et de régulation qui calcule à partir des paramètres de fonctionnement et à l'aide de valeurs de consigne pré-déterminées des paramètres de commande, des moyens pour assurer la sécurité des turbomachines à l'encontre de la survitesse et/ou du pompage, ainsi que d'après la mesure des paramètre de commande calculés, par exemple pour la position des valves d'entrée, la position des aubages, le débit de combustible, la position des valves d'échappement, commande et surveille la turbomachine en ce qui concerne sa vitesse de rotation et/ou sa puissance ainsi qu'à l'encontre de la survitesse et/ou du pontage,
caractérisé,
- en ce que le dispositif comporte deux systèmes de calcul (1,2) à vitesse de calcul différente susceptibles de fonctionner en parallèle et susceptible d'être couplé l'un à l'autre,
- en ce que le premier système de calcul rapide (1) est un processeur de signaux muni d'une unité centrale de traitement de signaux (10), et d'au moins d'un convertisseur analogique-numérique (11) et d'au moins un convertisseur numérique-analogique (12) et d'un bus 13 entre le processeur de signaux et les périphériques qui lui est propre,
- en ce que le deuxième système de calcul plus lent est un calculateur principal muni d'une unité centrale de calculateur principal (20), de mémoires de programme et de donné supplémentaire (25, 26), d'une unité d'entrée/sortie (24), d'au moins un convertisseur analogique-numérique (21) et un convertisseur numérique-analogique (22) respectivement et d'un bus de calculateur principal (23),
- et en ce que entre l'unité centrale de processeur (10) et le bus de calculateur principal (23), est prévue au moins une interface de communication (3).

14. Dispositif selon la revendication 13, caractérisé en ce que l'interface de communication (3) entre l'unité centrale de processeur de signaux (10) et le bus de calculateur principal (23) est constituée par une mémoire vive (Dual-Port-RAM) assurant un accès des deux côtés.

15. Dispositif selon la revendication 13 ou 14, caractérisé en ce que le premier système de calcul (1) comporte en outre une unité numérique d'entrée/sortie (14) reliée d'une part à un bus périphérique de processeur de signaux (13) et d'autre part au bus de calculateur principal (23), et formant une autre interface de communication (30) entre le premier et le deuxième système de calcul (1,2).
